**Europäisches Patentamt**

**European Patent Office**

**Office européen des brevets**

(19)

(11) Veröffentlichungsnummer: **0 026 381**
**B1**

(12) **EUROPÄISCHE PATENTSCHRIFT**

(45) Veröffentlichungstag der Patentschrift:
30.05.84

(51) Int. Cl.³: **G 09 G 1/02**, G 06 F 3/037

(21) Anmeldenummer: **80105484.2**

(22) Anmeldetag: **12.09.80**

(54) Verfahren zur Lokalisierung von Bereichen bei gemischter Text-/Bildbearbeitung am Bildschirm.

(30) Priorität: **28.09.79 DE 2939458**

(43) Veröffentlichungstag der Anmeldung:
**08.04.81 Patentblatt 81/14**

(45) Bekanntmachung des Hinweises auf die Patenterteilung:
**30.05.84 Patentblatt 84/22**

(84) Benannte Vertragsstaaten:
**AT BE CH FR GB IT LI LU NL**

(56) Entgegenhaltungen:
**US - A - 3 659 281**
**US - A - 3 974 494**

**ELECTRONIC DESIGN, Band 27, Nr. 13, 21. Juni 1974, New York, US, C. MELEAR et al.: "Simplify video-display design by using a versatile IC controller", Seiten 94-102**

(73) Patentinhaber: **SIEMENS AKTIENGESELLSCHAFT, Berlin und München Wittelsbacherplatz 2, D-8000 München 2 (DE)**

(72) Erfinder: **Woborschil, Walter, Dipl.-Ing., Gleichweg 26, D-8000 München 50 (DE)**

## Beschreibung

Die vorliegende Erfindung betrifft ein Verfahren zur Lokalisierung von Bereichen bei gemischter Text-/Bildbearbeitung am Bildschirm für Anwendungsfälle, bei denen der Bildschirm die zu bearbeitende Information mit zwei Helligkeitsstufen darstellt und bei dem ein Cursor als Hilfsmittel für die Lokalisierung verwendet wird, wobei der Cursor als Umrahmung des zu lokalisierenden Bereiches gestaltet ist und wobei die Umrahmung mit einer wählbaren Frequenz fortlaufend hell und dunkel getastet wird.

Zur Bearbeitung gemischter Text-Bildvorlagen mit Hilfe eines Bildschirms oder Displays müssen dem Bearbeiter Hilfsmittel zur Verfügung gestellt werden, die eine Lokalisierung sowohl von Textals auch von Bildelementen ermöglichen. Bei der Textbearbeitung ist ein solches Hilfsmittel als Cursor, meist in der Gestalt eines Rechteckes, bekannt. Ferner besteht das Problem der Zuordnung der Fläche eines Tableaus oder ähnlicher Geräte zur manuellen punktweisen oder vektoriellen Eingabe von z.B. Handschrift, Skizzen usw., die nicht die gesamte Bearbeitungsfläche abdecken, zur Bearbeitungsvorlage am Display.

Allgemein versteht man unter einem Cursor eine Markierung auf Bildschirmen, die dem Benutzer rein optisch eine momentan wichtige Bildstelle hervorhebt. Es ist dies bei Datensichtgeräten z.B. ein Strich oder eine hellere Fläche beim nächsten zu bearbeitenden Zeichen, bei Logikanalysatoren zumeist eine Linie – im Zeitdiagramm – zur Kennzeichnung der näher untersuchten Adresse des Speicherbereiches, vgl. «ELEKTRONIK» 1978, H. 5, Karteikarte Nr. 403.

Aus der US-A-3 974 494 ist es bereits an sich bekannt, eine schrittweise Verkleinerung eines Cursors bei Bewegung desselben in Richtung auf einen zu lokalisierenden Bildschirmbereich zu vorzunehmen.

Aus der Druckschrift Electronic Design, Band 27, S. 100, Z. 9 bis 12, ist bereits ein Verfahren der eingangs genannten Art bekannt, bei dem eine Umrahmung vorgesehen ist, die mit einer wählbaren Frequenz fortlaufend hell und dunkel getastet wird.

Aus der US-A-3 659 281 ist ein Lichtgriffelmarkierungssystem bekannt, bei dem die Grösse einer Markierung in Abhängigkeit von der Sichtfläche, welche durch den Abstand der lichtempfindlichen Griffelspitze von der Bildschirmoberfläche einer Anzeigeeinrichtung, nämlich einer Katodenstrahlröhre, bestimmt ist, variiert wird.

Der Erfindung liegt die Aufgabe zugrunde, eine bisher nicht bekannte Form eines Cursors zu schaffen, mit dessen Hilfe eine einfache und wirkungsvolle Lokalisierung von einzelnen Punkten, von Flächen oder von Textzeichen ermöglicht ist. Dabei soll der vorgeschlagene Cursor abhängig von der dargestellten Information gut erkennbar sein.

Die der Erfindung zugrundeliegende Aufgabe wird durch ein Verfahren zur Lokalisierung von Bereichen bei gemischter Text-/Bildbearbeitung am Bildschirm, für Anwendungsfälle, bei denen der Bildschirm die zu bearbeitende Information mit zwei Helligkeitsstufen darstellt und bei dem ein Cursor als Hilfsmittel für die Lokalisierung verwendet wird, wobei der Cursor als Umrahmung des zu lokalisierenden Bereiches gestaltet wird und wobei die Umrahmung mit einer wählbaren Frequenz forlaufend hell und dunkel getastet wird, gelöst.

Das erfindungsgemässe Verfahren ist dadurch gekennzeichnet, dass die Umrahmung als ein Winkel ausgebildet wird, dass der in dem durch die Umrahmung gekennzeichneten Bereich enthaltene Text und/oder die Bildinformation abwechselnd und fortlaufend mit der Umrahmung einer ersten hellen Tastphase und einer zweiten dunklen Tastphase unterworfen werden und dass die Umrahmung zur Lokalisierung eines Teilbereichs auf dem Bildschirm unter schrittweiser Verkleinerung auf den betreffenden Bereich zubewegt wird.

Die Erfindung bietet den Vorteil, dass ein sowohl für die Lokalisierung von Bereichen als auch von Textzeichen oder Punkten eines Bereiches geeigneter Cursor, der den hervorzuhebenden Bereich durch einen abwechselnd dunklen oder hellen Rahmen bzw. Winkel kennzeichnet, zur Verfügung steht.

Weiterbildungen der Erfindung sind durch die in den Unteransprüchen angegebenen Merkmale gekennzeichnet.

Im folgenden wird die Erfindung an Hand mehrerer Ausführungsbeispiele für die Erfindung betreffender Figuren erläutert.

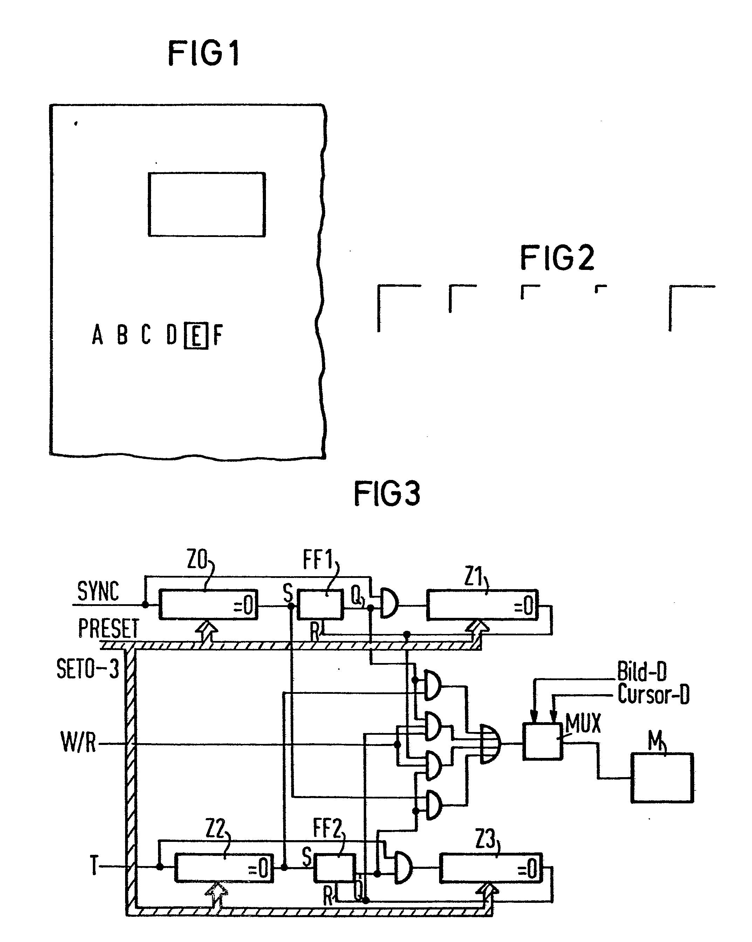

Fig. 1 zeigt schematisch jeweils einen Cursor, dessen durch seinen Rahmen angegebene Fläche der Grösse der Fläche eines Bildbereiches entspricht, und einen Cursor, der durch seinen Rahmen ein Textzeichen umschliesst.

Fig. 2 zeigt schematisch den erfindungsgemässen Cursor in Winkelform, der sich schrittweise verkleinernd, pulsierend auf einen zu lokalisierenden Punkt zubewegt.

Fig. 3 zeigt das Blockschaltbild eines Ausführungsbeispiels für eine Schaltungsanordnung, mittels derer das erfindungsgemässe System realisiert werden kann.

In der gezeigten Schaltungsanordnung wird als Display ein an sich bekannter Videomonitor M verwendet. Wesentliche Schaltungselemente sind die programmierbaren Zähler $Z_0 \ldots Z_3$. Die Zähler $Z_0$, $Z_1$ werden zu Beginn der Darstellung jedes Bildes, die Zähler $Z_2$, $Z_3$ zu Beginn jeder Zeile über die Leitungen «Preset» bzw. «Set 0–3» gesetzt.

Der Zähler $Z_0$ bestimmt die Position und der Zähler $Z_1$ die Länge des Cursors quer zur Zeilenrichtung. Für die Zähler $Z_2$, $Z_3$ gilt Entsprechendes in Zeilenrichtung. Die durch eine Anordnung von UND-Gliedern und einem ODER-Glied verknüpften Ausgangssignale eines ersten Flipflops $FF_1$ und eines zweiten Flipflops $FF_2$ bilden am Ausgang des ODER-Gliedes ein Signal zur erfindungsgemässen Darstellung des Cursors, der mittels eines an sich bekannten Multiplexers abwechselnd zur Bildinformation sichtbar gemacht wird.

## Patentansprüche

1. Verfahren zur Lokalisierung von Bereichen bei gemischter Text-/Bildbearbeitung am Bildschirm, für Anwendungsfälle, bei denen der Bildschirm die zu bearbeitende Information mit zwei Helligkeitsstufen darstellt und bei dem ein Cursor als Hilfsmittel für die Lokalisierung verwendet wird, wobei der Cursor als Umrahmung des zu lokalisierenden Bereiches gestaltet wird und wobei die Umrahmung mit einer wählbaren Frequenz fortlaufend hell und dunkel getastet wird, dadurch gekennzeichnet, dass die Umrahmung als ein Winkel ausgebildet wird, dass der in dem durch die Umrahmung gekennzeichneten Bereich enthaltene Text und/oder die Bildinformation abwechselnd und fortlaufend mit der Umrahmung einer ersten hellen Tastphase und einer zweiten dunklen Tastphase unterworfen werden und dass die Umrahmung zur Lokalisierung eines Teilbereichs auf dem Bildschirm unter schrittweiser Verkleinerung auf den betreffenden Bereich zubewegt wird.

2. Verfahren nach Anspruch 1, dadurch gekennzeichnet, dass eine weitere Tastphase vorgesehen ist, durch die jeweils zwischen einem Wechsel «dunkel/hell» und/oder «hell/dunkel» die betreffende Bildinformation sichtbar gemacht wird.

3. Verfahren nach Anspruch 1, dadurch gekennzeichnet, dass zur Darstellung einer den zu lokalisierenden Bereich bedeckenden Fläche eine Grössenbestimmung für die Fläche derart getroffen wird, dass in einem ersten Schritt im Punktmodus, beispielsweise mittels Cursor-Steuertasten oder mittels eines sog. Joysticks, die linke obere Ecke und in einem zweiten Schritt die rechte untere Ecke des die Fläche betreffenden Rechtecks definiert wird und dass während dieses Positionierungsvorgangs die aktuell begrenzte Fläche pulsierend angezeigt wird.

4. Verfahren nach Anspruch 1, bei dem ein Eingabegerät nur einen Teil einer auf dem Bildschirm dargestellten Bewertungsfläche, beispielsweise eine DIN-A4-Seite, abdeckt, dadurch gekennzeichnet, dass zunächst eine Marke mit dem Cursor mittels des Punktmodus auf der Bildschirmfläche positioniert wird und dass danach die auf dem Eingabegerät zur Verfügung stehende Fläche im Flächenmodus auf dem Bildschirm mittels der Marke dargestellt wird.

## Claims

1. A process for localising regions in a mixed text/image screen display, for applications in which the screen illustrates the information with two levels of luminance and a cursor is used as an auxiliary means for localisation, the cursor being a framing mark at the region to be localised and being continuously keyed from light to dark at a selectable frequency, characterised in that the framing mark of angular construction as an angle, that the text and/or image information contained in the region characterised by the framing is alternately and continuously subjected during framing to a light first keying phase and a dark second keying phase, and that in order to localise a partial region on the screen the framing mark is moved towards the respective region while gradually being reduced.

2. A process as claimed in Claim 1, characterised in that there is provided a further keying phase, by means or which the respective image information is rendered visible between a "dark/light" change and/or a "light/dark" change.

3. A process as claimed in Claim 1, characterised in that in order to illustrate a surface covering the region to be localised dimensioning of the surface is effected in such a manner that the upper left corner of the rectangle concerning the surface is defined in a first step in the point mode, for example by means of cursor control keys or by means of so-called joysticks, and the lower right corner of said rectangle is defined in a second step, and that the actually bordered surface is displayed in a pulsating fashion during the positioning process.

4. A process as claimed in Claim 1, wherein an input apparatus only covers a section of an evaluating surface, for example a DIN-A4-page which is illustrated on the screen, characterised in that firstly a mark is positioned on the screen surface by the cursor using the point mode, and that the surface which is available on the input apparatus is subsequently illustrated on the screen by means of the mark.

## Revendications

1. Procédé pour la localisation de zones dans le cas d'un traitement mixte de textes et d'images sur l'écran, pour des applications dans lesquelles l'écran représente l'information à traiter avec deux échelons de brillance, et suivant lequel un curseur est utilisé comme moyen auxiliaire pour la localisation, le curseur se présentant sous la forme d'un encadrement de la zone à localiser, et l'encadrement étant balayé de façon continue en clair et en foncé avec une fréquence pouvant être sélectionnée, caractérisé par le fait que l'encadrement se présente sous la forme d'un coude, que le texte et/ou l'information d'image contenue dans la zone caractérisée par l'encadrement sont soumis alternativement et de façon continue, avec l'encadrement, à une première phase de balayage claire et à une seconde phase de balayage foncée, et que l'encadrement pour la localisation d'une zone partielle sur l'écran est déplacé avec une réduction par paliers jusqu'à la zone concernée.

2. Procédé suivant la revendication 1, caractérisé par le fait qu'il est prévu une autre phase de balayage au moyen de laquelle l'information d'image concernée est rendue visible respectivement entre un passage «foncé/clair» et/ou «clair/foncé».

3. Procédé suivant la revendication 1, caractérisé par le fait que pour la représentation d'une surface recouvrant la zone devant être localisée une détermination de grandeur pour la surface est effectuée de manière que le coin supérieur gauche soit défini dans une première phase en mode par points, par exemple au moyen de touches de commande du curseur ou au moyen d'un organe appelé Joystick, et le coin inférieur droit du rectangle concernant la surface soit déterminé sans une seconde phase, et que pendant ce processus de positionnement la surface délimitée à ce moment soit affichée de façon pulsée.

4. Procédé suivant la revendication 1, dans lequel un appareil d'introduction de données ne recouvre qu'une partie d'une surface d'évaluation représentée sur l'écran, par exemple une feuille de format A4 suivant le norme DIN, caractérisé par le fait qu'un repère est tout d'abord positionné sur la surface de l'écran à l'aide du curseur, au moyen du mode par points, et qu'ensuite la surface disponible sur l'appareil d'introduction de données est représentée sur l'écran en mode de surface au moyen du repère.

# FIG1

# FIG2

A  B  C  D  E  F

# FIG3